# EUROPEAN PATENT SPECIFICATION

(11) **EP 1 456 298 B1**
(45) Date of publication and mention of the grant of the patent: **13.04.2005**
(21) Application number: 02805034.2
(22) Date of filing: 05.12.2002
(51) Int. Cl.: C08L 67/02, B60R 21/20

(54) **COPOLYETHER ESTER COMPOSITION AND AIR BAG COVER MADE THEREFROM**
COPOLYETHERESTERZUSAMMENSETZUNG UND DARAUS HERGESTELLTE AIRBAGABDECKUNGEN
COMPOSITION D'ESTER DE COPOLYETHER ET COUVERCLE DE COUSSIN GONFLABLE OBTENU A PARTIR DE CELLE-CI

(30) Priority: 18.12.2001 EP 01205219
(43) Date of publication of application: 15.09.2004
(73) Proprietor: DSM IP Assets B.V., 6411 TE Heerlen (NL)
(72) Inventor: LANGE, Ronald, Frans, Maria, NL-6371 LX Landgraaf (NL); RUTGERS, Gerhard, Johan, NL-6132 HS Sittard (NL)
(74) Representative: Krijgsman, Willem
(86) International application number: PCT/NL2002/000795
(87) International publication number: WO 2003/051991

(56) References cited:
- EP-A- 0 443 457
- US-A- 3 907 926
- US-A- 5 861 452
- PATENT ABSTRACTS OF JAPAN vol. 1996, no. 01, 31 January 1996 (1996-01-31) & JP 07 246901 A (ASAHI CHEM IND CO LTD), 26 September 1995 (1995-09-26) cited in the application

## Description

The invention relates to a copolyether ester composition. The invention also relates to a process for preparing such a copolyether ester composition and to a process for making an air bag cover from such composition. The invention also relates to an air bag system comprising an air bag cover obtainable by the latter process.

A copolyether ester is understood to be a segmented copolymer consisting essentially of polyester hard segments and aliphatic polyether soft segments, and is also referred to hereafter as COPE. Such a COPE belongs to the group of thermoplastic elastomers. These materials combine the processability of thermoplastic polymers with the flexibility or elasticity of rubbery thermoset materials, and show good thermo-oxidative stability and resistance to many chemicals. A copolyether ester composition that can be used for making automobile components requiring excellent stress-strength characteristics, low temperature impact strength and good paint adhesion, like an air bag cover is known from inter alia patent application EP 0443457 A2. This publication describes a composition containing i) a specific COPE with soft segments derived from at least a poly(alkylene oxide)diol composed of alkylene oxide units having a carbon-to-oxygen ratio of greater than 2.0 and a poly(ethylene oxide) glycol, and ii) one or more high molecular weight thermoplastic polyesters. An article made from a composition containing this specific COPE, shows improved paint adhesion.

Air bag systems represent one of the developments in automotive industry to increase safety for driver and passengers. In modem cars air bag systems not only include driver and front seat passenger air bags in the steering wheel or dashboard, but also side air bag systems, and air bags aiming at protecting specific body parts or back seat passengers. The requirements for an air bag system mounted in a steering wheel are considered the most stringent, because of the short distance to the driver and design restrictions to fit it in the steering wheel. An air bag system generally comprises a retainer, an inflator, an airbag, and an air bag cover, also referred to as air bag door. One of the most critical components appears to be the air bag cover, through which the actual air bag must inflate or "explode" once the system is activated. This cover should open up within some milliseconds in a controlled way: the cover should tear along predetermined paths without release of any parts or splintering. Moreover, the air bag system should function correctly under any climatic condition, i.e. at very low temperatures, for example at -40±5°C, as well at high temperatures, like at 90±5°C. Especially for steering wheel air bag systems, design considerations require a tensile modulus of 200-400 MPa for an air bag cover material. In addition, being visible parts in a car interior, aesthetic aspects like colour, surface gloss and feel, e.g. soft-touch, are also important. Good paintability is a further requirement, since most of the air bag covers are painted. Alternatively, the material from which the cover is made should show excellent mass colourability and scratch resistance.

A disadvantage of the known copolyether ester compositions, however, is that painted air bag covers made thereof do not show the required behaviour in low temperature deployment testing, especially at -35 ± 2°C. This last temperature range is specified in recent air bag deployment testing procedures like AK-LV07 in the German automotive industry. It means that the actual deployment testing procedure should take place in a climate chamber, and not outside it. If an air bag cover is cooled in a climate chamber to e.g. -40°C, then quickly mounted to an air bag system and tested at ambient conditions, the air bag cover will warm up to above -30°C within several seconds. This is the more so for the tear seams, that is, for the thin-walled paths along which controlled opening should take place. It has been found that a more stringent testing procedure like AK-LV07 leads to more failures in deployment testing, especially when the air bag cover is painted. At the low testing temperatures, most paints will show brittle failure behaviour, and will act as notches on the surface of the part made from the copolyether ester composition and thus initiating uncontrolled opening of the cover.

It is the object of the present invention to provide a copolyether ester composition that can be used for making a painted air bag cover, which composition does not show said disadvantages.

This object has been achieved according to the invention with a copolyether ester composition consisting essentially of a blend of
(a) at least one copolyether ester consisting essentially of polyester hard segments and aliphatic polyether soft segments and having a hardness lower than 46 Shore D; and
(b) at least one polyester with hardness higher than 60 Shore D, which polyester is compatible with the polyester hard segments of (a);
wherein components (a) and (b) are present in a mass ratio of 9/1 to 1/9, which composition has a modulus at -40°C lower than 500 MPa and at 190°C higher than 10 MPa, as measured with a Dynamic Mechanical Spectrometer (DMS) on a test-sample dynamically elongated at 1 Hz following ASTM D5026, and a melt viscosity, as measured at 240°C and at shear rate 1 s⁻¹, of at least 1 kPa.s.

An air bag cover made essentially from the copolyether ester composition according to the invention shows excellent performance in a deployment test according to AK-LV07 without splintering or broken parts, both when painted or unpainted. Another advantage of the copolyether ester composition according to the invention is that it has good processing characteristics, including high melt stability, good flow properties, and permitting short cycle-times in moulding. The copolyether ester composition according to the invention shows good paint adhesion, but can also be mass coloured with high colour consistency for making unpainted parts with nice appearance.

Patent application JP 72446901 A also discloses a copolyether ester composition used for making an air bag cover. This publication, however, teaches that a composition containing a specific COPE with soft segments derived from a polyether diol composed of neopentylene oxide and tetramethylene oxide units should be used for improving low temperature behaviour. Nor this publication, nor EP 0443457 A2 describes the specific composition of the present invention, having the specified moduli and melt viscosity. US 3907926 also discloses compositions comprising a COPE and PBT, but this publication does not mention modulus at 190°C and melt viscosity as relevant properties, and is silent on effects of a paint layer on performance.

The copolyether ester composition according to the invention suitably contains as component (a) at least one copolyether ester that has polyester hard segments that are built up from repeating units derived from at least one alkylene diol and at least one aromatic dicarboxylic acid or an ester thereof. As alternative to segment, also the term block is being used. The linear or cycloaliphatic alkylene diol contains generally 2-6 C-atoms, preferably 2-4 C-atoms. Examples thereof include ethylene glycol, propylene diol and butylene diol. Preferably propylene diol or butylene diol are used, more preferably 1,4-butylene diol. Examples of suitable aromatic dicarboxylic acids include terephthalic acid, 2,6-naphthalenedicarboxylic acid, 4,4'-biphenyldicarboxylic acid or combinations of these. The advantage thereof is that the resulting polyester is generally semi-crystalline with a melting point of above 150, preferably above 175, and more preferably of above 190°C. The hard segments may optionally further contain a minor amount of units derived from other dicarboxylic acids, for example isophthalic acid, which generally lowers the melting point of the polyester. The amount of other dicarboxylic acids is preferably limited to not more than 10, more preferably not more than 5 mol%, so as to ensure that, among other things, the crystallization behaviour of the copolyether ester is not adversely affected. The hard segment is preferably built up from ethylene terephthalate, propylene terephthalate, and in particular from butylene terephthalate as repeating units. Advantages of these readily available units include favourable crystallisation behaviour and a high melting point, resulting in copolyether esters with good processing properties and excellent thermal and chemical resistance.

Suitable aliphatic polyether soft segments in the copolyether ester of component (a) are flexible polyethers that are substantially amorphous and have a glass-transition temperature (T_{g}) of below 0°C. Preferably, the T_{g} is below -20°C, more preferably below -40, and most preferably below -50°C. The molar mass of the segments may vary within a wide range, but preferably the molar mass is chosen between 400 and 6000, more preferably between 500 and 4000, and most preferably between 750 and 3000 g/mol. Suitable aliphatic polyethers include a poly(alkylene oxide)diol derived from an alkylene oxide of 2-6 C-atoms, preferably 2-4 C-atoms, or combinations thereof. Examples include poly(ethylene oxide)diol, poly(tetramethylene oxide)diol or poly(tetrahydrofuran)diol, poly(neopentylene oxide-co-tetramethylene oxide)diol, poly(propylene oxide)diol and ethylene oxide-terminated poly(propylene oxide)diol. Preferred is ethylene oxide-terminated poly(propylene oxide)diol because of its good reactivity and compatibility in making a COPE, and a favourable combination of good low temperature and high temperature performance of the resulting COPE.

The ratio of soft to hard segments in the copolyether ester is chosen such that a copolymer of hardness below 46 Shore D is obtained for component (a). Depending on the nature of the soft and hard segments, the skilled person can make this choice, if needed based on some routine experimentation.

The copolyether ester can further contain a compound with two or more functional groups that can react with an acid- or hydroxyl-group, acting as chain extension or chain branching agent, respectively. Examples of suitable chain extension agents include carbonylbislactams, diisocyanates and bisepoxides. Suitable chain branching agents include e.g. trimellitic acid, trimellitic acid anhydride and trimethylol propane. The amount and type of chain extension or branching agent is chosen such that a block copolyester of desirable melt viscosity is obtained. In general, the amount of a chain branching agent will not be higher than 6.0 equivalents per 100 moles of dicarboxylic acids presenting the copolyether ester. The copolyether ester can further contain the usual catalysts and stabilisers.

Examples and preparation of copolyether esters are for example described in Handbook of Thermoplastics, ed. O.Olabishi, Chapter 17, Marcel Dekker Inc., New York 1997, ISBN 0-8247-9797-3, in Thermoplastic Elastomers, 2nd Ed, Chapter 8, Carl Hanser Verlag (1996), ISBN 1-56990-205-4, in Encyclopedia of Polymer Science and Engineering, Vol. 12, Wiley & Sons, New York (1988), ISBN 0-471-80944, p.75-117, and the references cited therein.

Particularly preferred is a copolyether ester with hard segments built up from butylene terephthalate units and soft segments derived from ethylene oxide-terminated poly(propylene oxide)diol. The ratio of amounts of propylene oxide and ethylene oxide in such a polyether may vary within a wide range, for example between 20:1 and 1:6, but is preferably between 10:1 and 1:1, even more preferably between 5:1 and 1:1. Advantages of such a polyether segment are improved performance at low temperatures, and also at elevated temperatures due to better retention of crystallinity of the polyester hard segment in the copolyether ester.

Preferably, component (a) is of hardness lower than 40 Shore D. This results in better low temperature properties of the copolyether ester composition.

Component (b), a polyester with hardness higher than 60 Shore D and compatible with the polyester hard segments of component (a) can be a copolyether ester as described above with hard segments substantially similar to the hard segments in component (a). Within the context of the present application, the term compatible implies that two polymers can be mixed into a blend with stable phase morphology, but does not require the polymers to be thermodynamically miscible. The polyether soft segments in this COPE can be the same as in component (a), but also different. The ratio of soft to hard segments in the component (b) copolyether ester is chosen such that a copolymer of hardness of above 60 Shore D is obtained. Preferably, this copolyether ester as component (b) has a hardness of higher than 65, more preferably higher than 70 Shore D.

In another preferred embodiment of the composition according to the invention, the polyester component (b) is substantially similar to the polyester hard segment in component (a), e.g. polybutylene terephthalate (PBT). The advantage of these preferred embodiments is, that with increasing hardness of component (b) the composition shows a higher modulus at high temperature without losing favourable low temperature properties.

The copolyether ester composition may further contain customary additives, like stabilisers, anti-oxidants, colorants, or processing aids, each in amounts of up to 5, preferably up to 2.5 mass% based on the composition. The composition may if desired also contain mineral fillers or flame retarding compounds, generally in amounts of up to 30, preferably up to 20 mass%.

It has been found that a copolyether ester composition as described above that has a modulus at -40°C smaller than 500 MPa, a modulus at 190°C higher than 10 MPa, and a melt viscosity, as measured at 240°C and at shear rate 1 s⁻¹, of at least 1 kPa.s results in positive deployment tests on an air bag system containing an air bag cover, optionally painted, made from said composition. The type and amounts of components (a) and (b) and optionally other components in the copolyether ester composition according to the invention are chosen such that said limiting values for modulus are fulfilled. These amounts are of course depending on the properties, for example hardness, of components (a) and (b). The person skilled in the art can base such selection on his general knowledge and routine experimentation. Generally, components (a) and (b) are present in a mass ratio of 9/1 to 1/9.

Especially the melt viscosity requirement for the polyether ester composition is surprising, since such an influence of viscosity was not found when evaluating standard test specimen moulded from different compositions in a low temperature impact test, like a falling dart impact test performed at -35°C.

Preferably, the melt viscosity of the copolyether ester composition as defined above is at least 1250 Pa.s, and even more preferably at least 1500 Pa.s, since increasing viscosity results in further improvement in deployment testing performance of air bag covers moulded from the composition.

Alternatively or in addition to melt viscosity, also the melt flow index (MFI) can be measured. The copolyether ester composition according to the invention shows a MFI of not more than 20 g/10min (measured at 230°C and 2.16 kg load), preferably not more than 17 g/10min, and even more preferably not more than 15 g/10min.

Within the context of this application, modulus is understood to mean modulus in strain as measured with a Dynamic Mechanical Spectrometer on a test-sample that is dynamically elongated in a certain temperature range at a frequency of 1 Hz, following ASTM 05026. With tensile modulus is meant the modulus determined from a tensile test according to ISO 527-1 at room temperature. Melt viscosity can, for example, be measured with a dynamical mechanical spectrometer using a plate/plate geometry at a chosen frequency, for example 1 Hz. The temperature at which melt viscosity or MFI are determined are of course dependent on the melting point of the composition; the skilled man knows when and how to adjust this.

The invention also relates to a process for preparing the copolyether ester composition according to the invention, wherein the components (a) and (b) and optionally other components like additives are melt blended, and subsequently solid state post-condensed until the desired viscosity has been reached. For melt blending customary equipment may be used, like batch type of mixers, single screw extruders, and preferably, twin screw extruders. Preferably, processing conditions and equipment is chosen such, that optimum blending of components and a homogeneous, be it often micro-phase separated, composition results. After melt blending, the composition is generally made into a granular form. The resulting granules or pellets are subsequently post-condensed in the solid state until the desired viscosity level is reached. Solid state post-condensation (SSP) is generally carried out slightly below the crystalline melting point of a material. The higher this SSP temperature, the faster the condensation reaction will be. The temperatures should on the other hand not be so high that the pellets will stick together. Typically, SSP is performed 10-30°C below the melting point of the major components in the composition. The advantage of the process according to the invention over e.g. melt blending of higher viscous components, or addition of viscosity enhancers also resulting in a composition of similar viscosity, is a better control of the blending process and morphology of the composition and higher product consistency.

The invention also relates to a process for making moulded parts like automotive parts, especially air bag covers, comprising moulding the part from the copolyether ester composition according to the invention. With moulding particularly injection moulding is referred to, although other moulding techniques are not excluded.

Use of copolyether ester compositions for making air bag covers has been described before, for example in EP 0357356 A1, US 5861452 and WO 0004073 A1, but these publications do not address the specific compositions of the present invention.

The invention also relates to an air bag cover comprising a copolyether ester composition, which cover passes a deployment test, especially at -35 ± 2°C.

Such an air bag cover is for example known from EP 564974 A2 and EP 779185 A2. Those covers are, however, made from more than one plastic composition. For example a two-component part is made with a very soft surface layer of plastic material covering one or more parts moulded from another plastic of higher stiffness and providing mechanical integrity. During deployment generally only the very soft and weak skin layer needs to be ruptured. Disadvantage of such covers are production complexity and higher cost.

The present invention aims to provide an air bag cover that does not show these disadvantages.

Said aim is achieved according to the invention with an airbag cover that consists essentially of the copolyether ester composition according to the invention. Consisting essentially of means in this case, that the cover is moulded from said composition as a one-component part, but it may further comprise for example a coating layer, or smaller components or inserts made from a metal or other material.

The invention also concerns an air bag system comprising an air bag cover that is obtainable by said process of moulding the part from the copolyether ester composition according to the invention. The advantage of such an air bag system it is that it shows excellent performance in low temperature deployment testing, especially at -35 ± 2°C as prescribed in procedures like AK-LV07. More specifically, the invention concerns steering wheel air bag systems, where a typical design requirement for the plastic composition from which the cover is to be made, is a tensile modulus at room temperature of 200-400 MPa, as measured in a tensile test according ISO 527-1. In a special embodiment, the invention relates to a system comprising an air bag cover that is provided with a surface coating layer; that is to a painted air bag cover. Until now, an air bag system comprising such painted air bag cover did not pass deployment testing at actual temperatures at or below -35°C.

Therefore, the invention also relates to an air bag system comprising a painted air bag cover made from a thermoplastic composition with a tensile modulus of 200-400 MPa at room temperature, which air bag system passes a deployment test according to AK-LV07 at -35 ± 2°C. The thermoplastic composition applied in this air bag system is preferably a copolyether ester composition, more preferably a copolyether ester composition having a modulus at -40°C lower than 500 MPa and at 190°C higher than 10 MPa, as measured with a Dynamic Mechanical Spectrometer on a test-sample dynamically elongated at 1 Hz following ASTM D5026, and even more preferably a copolyether ester composition according to the present invention.

The invention will now be further elucidated with the following examples and comparative experiments.

### Materials

- COPE 38: copolyether ester with hard segments based on PBT and soft segments derived from an ethylene oxide-terminated poly(propylene oxide)diol with molar mass of about 2300 g/mol and ratio of propylene oxide / ethylene oxide of about 2/1; hardness about 38 Shore D; relative solution viscosity (RSV) of 2,8;
- COPE 44: similar to COPE 38, but of hardness 44 Shore D; RSV 2.65;
- COPE 58: similar to COPE 38, but of hardness 58 Shore D; RSV 2.45;
- COPE 40: copolyether ester with hard segments based on PBT and soft segments derived from a poly(tetramethylene oxide)diol with molar mass of about 2000 g/mol; hardness about 40 Shore D; RSV 3.45;
- COPE 74: copolyether ester with hard segments based on PBT and soft segments derived from a poly(tetramethylene oxide)diol with molar mass of about 1000 g/mol, of hardness about 74 Shore D; RSV 2.9;
- PBT: polybutylene terephthalate homopolymer.

### Test procedures

Hardness according to Shore D was measured on a sample following the instructions of ISO 868.

Relative solution viscosity (RSV) was determined on a 1 mass% solution of copolymer in m-cresol at 25°C.

Melt viscosity was measured with a Rheometrics RMS-800 apparatus at 240°C after a residence time of about 15 minutes, using a dynamic operating mode with frequency sweep and a disc and plate geometry.

Melt Flow Index (MFI) was measured at 230°C with a load of 2.16 kg, following ISO 1133 instructions.

Moduli (or moduli determined in strain) at different temperatures were determined using a Rheometrics RSA-II DMS at a frequency of 1 Hz and heating rate of 5°C/min on samples of about 2.0 mm width, 0.09 mm thickness and length between clamps of about 21.8 mm, which method follows ASTM D5026.

Tensile modulus was determined on standard injection moulded specimen according to ISO 527-1 (at crosshead rate of 1 mm/min).

Falling dart impact strength was measured on samples of 80*80*2 mm using an Impact tester II with Impact 32 soft-ware (J&B Instruments). In this test a dart of 9.95 mm diameter (hemispherical) and total mass of 4,865 kg falls from a height of 1000 mm onto the sample supported by a grooved ring of 20 mm diameter.

The materials were injection moulded using standard processing parameters into air bag covers using an existing mould. Some of the air bag covers were painted using a commercial 1-component coating system, generally used for this application. Adhesion of the coating to the cover was excellent on the total surface. Air bag deployment of an assembled air bag system was tested according to AK-LV07 procedures at -35 ± 2°C.

### Examples 1 and 2

The blend composition was prepared by melt blending the components indicated in Table 1 on a Berstorff 60 mm single screw extruder, at temperature settings of 230-270°C, screw speed 50 rpm and through-put rate of about 90 kg/h. In addition to indicated components the composition contained effective amounts of heat- and UV-stabilisation packages.

Post condensation was performed at a temperature of 160-190°C, under inert atmosphere at a pressure of about 200 Pa, during 5 - 50 hours, until the indicated MFI value was reached.

Relevant material properties and test results are collected in Table 1. Air bag covers moulded from this composition passed all deployment tests, whether the air bag cover was painted or not.

### Examples 3 and 4

The composition indicated in Table 1 is prepared analogously to Examples 1 and 2. Air bag covers moulded from this composition also pass all deployment tests.

### Comparative experiments A and B

Analogously to Example 1, the indicated blend was prepared, but not post-condensed, so that it has significantly lower melt viscosity (see Table 1). An unpainted air bag cover passed the deployment test at -35°C, but a painted cover failed.

### Comparative experiments C and D

The copolyether ester COPE 44 was used as the single polymer component in a composition to mould air bag covers. The covers appeared not to pass the deployment test at -35°C.

### Comparative experiment E

The copolyether ester COPE 58 was used as the single polymer component in a composition to mould air bag covers. The covers appeared not to pass the deployment test at -35°C.

### Comparative experiments F and G

In a manner similar to Comparative experiments A and B, the indicated blend was prepared and moulded into air bag covers. The blend shows different moduli and melt viscosity than the composition according to the invention, as listed in Table 1. The obtained covers failed in the deployment test, both when painted and unpainted.

### Comparative experiment H

In a manner similar to Example 1, the indicated blend was prepared and moulded into air bag covers. This composition shows high melt viscosity, but not a modulus at -40°C of below 500 MPa. Even unpainted covers failed in the deployment test.

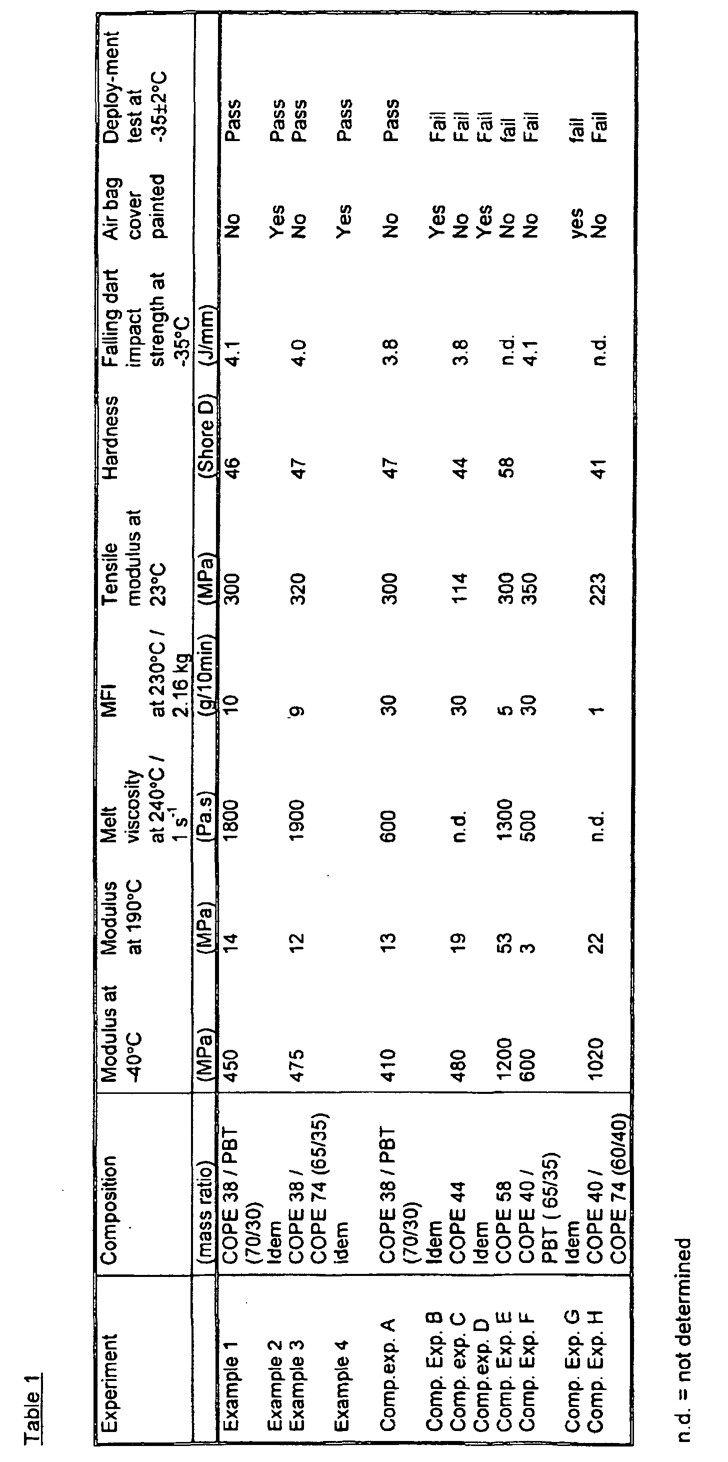

## Claims

1. Copolyether ester composition consisting essentially of a postcondensed blend of
(a) at least one copolyether ester consisting essentially of polyester hard segments, that are built up from repeating units derived from at least one alkylene diol and at least one aromatic dicarboxylic acid or an ester thereof, and aliphatic polyether soft segments that are flexible polyethers that are substantially amorphous and have a glass-transition temperature (T_{g}) of below 0°C, the copolyether ester having a hardness lower than 46 Shore D; and
(b) at least one polyester with hardness higher than 60 Shore D, which polyester is compatible with the polyester hard segments of component (a);
wherein components (a) and (b) are present in a mass ratio of 9/1 to 1/9, which composition has a modulus at -40°C lower than 500 MPa and at 190°C higher than 10 MPa, as measured with a Dynamic Mechanical Spectrometer on a test-sample dynamically elongated at 1 Hz following ASTM D5026, and a melt viscosity, as measured at 240°C and at shear rate 1 s⁻¹, of at least 1 kPa.s.

2. Copolyether ester composition according to claim 1, wherein the polyester hard segment is built up from butylene terephthalate units.

3. Copolyether ester composition according to any one of claims 1-2, wherein the polyether soft segment is derived from ethylene oxide-terminated poly(propylene oxide)diol.

4. Copolyether ester composition according to any one of claims 1-3, wherein the copolyether ester has hard segments built up from butylene terephthalate units and soft segments derived from ethylene oxide-terminated poly(propylene oxide)diol.

5. Copolyether ester composition according to any one of claims 1-4, wherein component (a) has hardness lower than 40 Shore D.

6. Copolyether ester composition according to any one of claims 1-5, wherein component (b) is a copolyether ester with hard segments substantially similar to the hard segments in component (a).

7. Copolyether ester composition according to claim 6, wherein component (b) has hardness higher than 70 Shore D.

8. Process for preparing the copolyether ester composition according to any one of claims 1-7, comprising melt blending the components (a) and (b) and optionally additives, and subsequently solid-state post-condensing until the desired viscosity has been reached.

9. Process for making an automotive part, especially an air bag cover, comprising moulding the part from the copolyether ester composition according to any one of claims 1-7.

10. Air bag cover consisting essentially of the copolyether ester composition according to any one of the claims 1-7.

11. Air bag system comprising an air bag cover obtainable by the process according to claim 9.

## Patentansprüche

1. Copolyetheresterzusammensetzung, bestehend im wesentlichen aus einem nachkondensierten Blend von
(a) mindestens einem Copolyetherester, bestehend aus im wesentlichen harten Polyestersegmenten, die aus wiederkehrenden Einheiten aufgebaut sind, die aus mindestens einem Alkylendiol und mindestens einer aromatischen Dicarbonsäure oder einem Ester davon abgeleitet sind, und weichen, aliphatischen Polyethersegmenten, die flexible Polyether sind, welche im wesentlichen amorph sind und eine Glasübergangstemperatur (Tg) von unter 0°C aufweisen, wobei der Copolyetherester eine Härte von weniger als 46 Shore D aufweist, und
(b) mindestens einem Polyester mit einer Härte von höher als 60 Shore D, wobei der Polyester mit den harten Polyestersegmenten der Komponente (a) kompatibel ist,
wobei die Komponenten (a) und (b) in einem Massenverhältnis von 9/1 bis 1/9 vorliegen, wobei die Zusammensetzung einen Modul bei -40°C von weniger als 500 MPa und bei 190°C von höher als 10 MPa, gemessen mit einem dynamischen mechanischen Spektrometer an einer Testprobe, dynamisch verlängert bei 1 Hz ASTM D5026 folgend, und eine Schmelzviskosität, gemessen bei 240°C und einer Scherrate von 1 s⁻¹ von mindestens 1 kPa.s aufweist.

2. Copolyetheresterzusammensetzung nach Anspruch 1, wobei die harten Polyestersegmente aus Butylenterephthalateinheiten aufgebaut ist.

3. Copolyetheresterzusammensetzung nach einem der Ansprüche 1-2, wobei das weiche Polyethersegment von Ethylenoxid-terminiertem Poly(propylenoxid)diol abgeleitet ist.

4. Copolyetheresterzusammensetzung nach einem der Ansprüche 1-3, wobei der Copolyetherester harte Segmente, die aus Butylenterephthalateinheiten aufgebaut sind, und weiche Segmente, abgeleitet von Ethylenoxid-terminiertem Poly(propylenoxid)diol, aufweist.

5. Copolyetheresterzusammensetzung nach einem der Ansprüche 1-4, wobei Komponente (a) eine Härte von weniger als 40 Shore D aufweist.

6. Copolyetheresterzusammensetzung nach einem der Ansprüche 1-5, wobei Komponente (b) ein Copolyetherester mit harten Segmenten ist, die im wesentlichen ähnlich zu den harten Segmenten in Komponente (a) sind.

7. Copolyetheresterzusammensetzung nach Anspruch 6, wobei Komponente (b) eine Härte von höher als 70 Shore D aufweist.

8. Verfahren zur Herstellung der Copolyetheresterzusammensetzung nach einem der Ansprüche 1-7, umfassend das Schmelzblenden der Komponenten (a) und (b) und gegebenenfalls von Additiven und nachfolgend das Nachkondensieren im Festzustand, bis die gewünschte Viskosität erreicht worden ist.

9. Verfahren zur Herstellung eines Kraftfahrzeugteils, insbesondere einer Airbagabdeckung, umfassend das Formen des Teils aus der Copolyetheresterzusammensetzung nach einem der Ansprüche 1-7.

10. Airbagabdeckung, bestehend im wesentlichen aus der Copolyetheresterzusammensetzung nach einem der Ansprüche 1-7.

11. Airbagsystem, umfassend eine Airbagabdeckung, erhältlich durch das Verfahren gemäß Anspruch 9.

## Revendications

1. Composition de copolyéther ester consistant essentiellement en un mélange postcondensé de
(a) au moins un copolyéther ester consistant essentiellement en des segments durs de polyester, qui se développent à partir de motifs répétés dérivés d'au moins un alkylène diol et d'au moins un acide dicarboxylique aromatique ou un ester de celui-ci, et des segments souples de polyéther aliphatique qui sont des polyéthers flexibles qui sont sensiblement amorphes et ont une température de transition vitreuse (T_{g}) inférieure à 0°C, le copolyéther ester ayant une dureté inférieure à 46 Shore D ; et
(b) au moins un polyester avec une dureté supérieure à 60 Shore D, lequel polyester est compatible avec les segments durs de polyester du composant (a) ;
dans laquelle les composants (a) et (b) sont présents en un rapport en masse de 9/1 à 1/9, laquelle composition a un module à -40°C inférieur à 500 MPa et à 190°C supérieur à 10 MPa, mesuré avec un spectromètre mécanique dynamique sur un échantillon d'essai allongé dynamiquement à 1 Hz suivant la norme ASTM D 5026 ; et une viscosité à l'état fondu, mesurée à 240°C et à une vitesse de cisaillement de 1 s⁻¹, d'au moins 1 kPa.s.

2. Composition de copolyéther ester selon la revendication 1, dans laquelle le segment dur de polyester se développe à partir de motifs de théphtalate de butylène.

3. Composition de copolyéther ester selon l'une quelconque des revendications 1 à 2, dans laquelle le segment souple de polyéther est dérivé de poly(oxyde de propylène) diol terminé par oxyde d'éthylène.

4. Composition de copolyéther ester selon l'une quelconque des revendications 1 à 3, dans laquelle le copolyéther ester comporte des segments durs développés à partir de motifs de téréphtalate de butylène et des segments souples dérivés de poly(oxyde de propylène) diol terminé par oxyde d'éthylène.

5. Composition de copolyéther ester selon l'une quelconque des revendications 1 à 4, dans laquelle le composant (a) a une dureté inférieure à 40 Shore D.

6. Composition de copolyéther ester selon l'une quelconque des revendications 1 à 5, dans laquelle le composant (b) est un copolyéther ester avec des segments durs sensiblement similaires aux segments durs dans le composant (a).

7. Composition de copolyéther ester selon la revendication 6, dans laquelle le composant (b) a une dureté supérieure à 70 Shore D.

8. Procédé de préparation de la composition de copolyéther ester selon l'une quelconque des revendications 1 à 7, comprenant le mélange à l'état fondu des composants (a) et (b) et facultativement d'additifs, et ultérieurement la postcondensation à l'état solide jusqu'à ce que la viscosité souhaitée ait été atteinte.

9. Procédé de fabrication d'une partie automobile, spécialement d'une enveloppe de coussin de sécurité gonflable, comprenant le moulage de la partie à partir de la composition de copolyéther ester selon l'une quelconque des revendications 1 à 7.

10. Enveloppe de coussin de sécurité gonflable consistant essentiellement en la composition de copolyéther ester selon l'une quelconque des revendications 1 à 7.

11. Système de coussin de sécurité gonflable comprenant une enveloppe de coussin gonflable pouvant être obtenue par le procédé selon la revendication 9.
